# FASCICULE DE BREVET EUROPEEN

(11) **EP 1 601 539 B1**
(45) Date de publication et mention de la délivrance du brevet: **27.12.2006**
(21) Numéro de dépôt: 04714757.4
(22) Date de dépôt: 26.02.2004
(51) Int. Cl.: B60C 13/00

(54) **PNEUMATIQUE A FLANC RENFORCE ET PROCEDE DE FABRICATION**
REIFEN MIT VERSTÄRKTER FLANKE UND HERSTELLUNGSVERFAHREN DAFÜR
TYRE WITH A REINFORCED FLANK AND METHOD FOR THE PRODUCTION THEREOF

(30) Priorité: 03.03.2003 FR 0302574
(43) Date de publication de la demande: 07.12.2005
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: ALLARD, Frédéric, F-63115 Mezel (FR)
(74) Mandataire: Diernaz, Christian
(86) Numéro de dépôt international: PCT/EP2004/001910
(87) Numéro de publication internationale: WO 2004/078494

(56) Documents cités:
- EP-A- 0 634 297
- EP-A- 0 770 504
- US-A- 2 186 178
- US-A- 3 631 913
- PATENT ABSTRACTS OF JAPAN vol. 015, no. 411 (M-1170), 21 octobre 1991 (1991-10-21) -& JP 03 169726 A (SUMITOMO RUBBER IND LTD), 23 juillet 1991 (1991-07-23)

## Description

La présente invention concerne les pneumatiques et plus particulièrement la structure de renforcement des flancs des pneumatiques.

On rappelle qu'un pneumatique, notamment destiné à équiper un véhicule de tourisme, comprend :
- des bourrelets destinés à coopérer avec une jante de montage du pneumatique, lesdits bourrelets comprenant au moins une structure annulaire de renforcement ;
- un sommet comprenant une structure de renforcement comportant une pluralité de renforts comme des câbles ou des fils noyés dans des mélanges de caoutchouc, ce sommet étant surmonté radialement vers l'extérieur par une bande de roulement dont la fonction est d'assurer le contact en roulage avec la chaussée ;
- de part et d'autre du sommet du pneumatique, un flanc assurant la liaison avec chaque bourrelet.

En outre, un pneumatique comprend une armature de carcasse formée d'une pluralité de renforts (câbles, fils notamment) noyés dans un mélange de caoutchouc, lesdits renforts étant orientés dans des directions préférentielles. Par exemple, les renforts de l'armature de carcasse, sous la forme d'une ou plusieurs nappes, peuvent être disposés de manière à faire un angle proche ou égal à 90° avec la direction circonférentielle sur le pneumatique ; d'autres possibilités connues consistent à disposer ces renforts sur plusieurs nappes de carcasse, les renforts de chaque nappe étant sensiblement parallèles les uns aux autres et faisant un angle différent de 90° avec la direction circonférentielle tout en étant croisés avec les renforts de chaque nappe de carcasse adjacente. Les renforts de l'armature de carcasse peuvent être répartis dans le pneumatique sans pour autant former des nappes (ou couches) en étant par exemple posés de manière individuelle ou par bande de plusieurs renforts parallèles les uns aux autres dans ladite bande.

En général, l'armature de carcasse s'étend dans le sommet du pneumatique et dans chaque flanc pour s'ancrer sur la structure annulaire de renforcement de chaque bourrelet. Une possibilité consiste à ancrer l'armature de carcasse formée d'une nappe de carcasse par enroulement partiel autour de ladite structure annulaire.

Dans le cas de pneumatiques d'indice de vitesse correspondant à des vitesses maximales d'usage très élevées (par exemple supérieures à 240 km/h), il a été proposé des armatures de carcasse comprenant plusieurs nappes de carcasse, l'une au moins desdites nappes étant ancrée par enroulement partiel autour d'une structure annulaire de renforcement en formant un retournement et l'une au moins des nappes de carcasse étant ancrée dans le même bourrelet par couplage mécanique sur ledit retournement en passant ensuite radialement à l'intérieur de la structure annulaire de renforcement.

Cette dernière architecture présente un intérêt certain pour ces pneumatiques en ce qu'elle confère une plus grande rigidité aux flancs des pneumatiques et permet d'augmenter sensiblement les performances en virage à grande vitesse.

Une autre famille de solutions consiste à combiner à une armature de carcasse la présence d'armatures supplémentaires d'éléments croisés dans au moins un des flancs.

Le brevet **US 2 186 178**, dans le but de conférer au pneumatique, plus particulièrement à armature de carcasse radiale (c'est-à-dire dont les renforts font un angle égal à ou proche de 90° avec la direction circonférentielle), une plus grande stabilité en roulage sans cependant pénaliser le confort, propose de disposer à la jonction entre bourrelet et flanc du pneumatique une tringle additionnelle ou secondaire servant d'ancrage à des structures additionnelles de renforcement.

Le brevet **FR 1 590 025** reprend sensiblement le même principe en le perfectionnant par l'apport d'un profil d'armature de carcasse adapté dans le flanc de pneumatique. Dans le pneumatique monté sur sa jante de service et gonflé à sa pression nominale, la portion d'armature de carcasse adjacente à la bande de roulement s'étend jusqu'au-delà de la mi-hauteur de flanc en s'écartant progressivement du plan médian et présentant un profil méridien relativement peu incurvé, alors que la seconde portion intercalée radialement entre la première portion et la tringle d'ancrage d'armature de carcasse a une hauteur radiale réduite et un profil méridien relativement très incurvé, les deux portions décrites étant jointes par un deuxième renfort circonférentiel sous forme de tringle. Le même principe d'une tringle additionnelle placée à la jonction du flanc et du bourrelet est repris par le brevet **DE 2 357 265.**

Dans le brevet **FR 2 277 688,** il a été proposé une structure conférant aux flancs une plus grande résistance aux déformations subies à haute vitesse. Selon ce document, il est proposé un pneumatique dont le sommet comprend une nappe additionnelle, située entre l'armature de carcasse et les nappes de sommet, dont les extrémités axiales sont repliées autour d'un anneau circonférentiel de fil ou câble.

Dans une demande de brevet publiée sous le numéro **WO 02/09955,** il a été proposé un pneumatique ayant de grandes performances, en augmentant les rigidités transversale et longitudinale d'au moins un des flancs basée sur ledit principe d'anneau de renforcement additionnel dans au moins un flanc. En outre, cet anneau de renforcement additionnel de flanc situé axialement à l'intérieur de la nappe de carcasse dite axialement extérieure est combiné à la présence d'un profilé de mélange caoutchouteux radialement situé entre ledit élément d'ancrage de bourrelet et ledit anneau de flanc, et axialement situé à l'intérieur de la nappe de carcasse dite axialement à l'extérieur.
Un pneumatique conforme au préambule de la revendication 1 est décrit dans le document JP 03 169 726 A.

Si ces diverses solutions techniques permettent une augmentation notable des performances à hautes vitesses, il a été constaté qu'un besoin d'amélioration existait encore et en particulier pour des pneumatiques dont le rapport de section était supérieur à 40%(le rapport de section noté H/S, est égal au rapport entre la hauteur radiale de section du pneumatique et la largeur hors tout du pneumatique, ces grandeurs étant mesurées lorsque le pneumatique est monté sur sa jante de montage et gonflé à sa pression nominale telles que définies dans la norme ETRTO).

En vue d'améliorer significativement le comportement à vitesse élevée (et entre autres, pour diminuer le plus possible les déformations liées à cette vitesse pouvant apparaître dans les flancs) d'un pneumatique et notamment, mais pas exclusivement, celui d'un pneumatique ayant un rapport H/S supérieur ou égal à **40%,** il est proposé un pneumatique, prévu pour être monté sur une jante de montage de diamètre maximal **Dc,** et comprenant :
- des bourrelets destinés à coopérer avec la jante de montage du pneumatique, lesdits bourrelets comprenant au moins une structure annulaire de renforcement ;
- un sommet comprenant une structure de renforcement comportant une pluralité de renforts comme des câbles ou des fils noyés dans des mélanges de caoutchouc, ce sommet étant surmonté radialement vers l'extérieur par une bande de roulement dont la fonction est d'assurer le contact en roulage avec la chaussée ;
- de part et d'autre du sommet du pneumatique, un flanc assurant la liaison avec chaque bourrelet ;
- une armature de carcasse s'étendant entre le sommet et les bourrelets et destinée à équilibrer les efforts dus à la pression de gonflage et à transmettre à la jante via les bourrelets les efforts auxquels est soumis le sommet ; et dont:

- au moins un flanc comprend au moins deux structures annulaires additionnelles de renforcement, chaque structure annulaire additionnelle ayant un diamètre interne au moins égal au diamètre maximal **Dc** de la jante de montage du pneumatique ; et
- l'armature de carcasse est ancrée au moins partiellement sur chaque structure annulaire de renforcement de bourrelet et sur chaque structure annulaire additionnelle de renforcement de flanc de manière à créer un effort de tension circonférentiel dans chaque structure annulaire dès le gonflage du pneumatique.

Par diamètre maximal **Dc** de la jante de montage, on entend le diamètre du cercle sur lequel se trouvent les points de la jante radialement les plus éloignés de l'axe de rotation. Par exemple, pour une jante usuelle pourvue de rebords de jante sur ses bords latéraux, le diamètre **Dc** de la jante correspond au diamètre du cercle passant par les points radialement à l'extérieur desdits rebords.

Par structure annulaire, on entend une structure qui, dans le pneumatique, est capable de supporter un effort de tension circonférentiel supérieur à l'effort qui serait supporté par le même volume de mélange de caoutchouc. On peut notamment employer comme structure annulaire :
- une tringle de type tressée formée d'un ou de plusieurs fils ou câbles métalliques ou textiles ou tout type de structure d'ancrage usuelle de bourrelet ;
- un anneau en matériau métallique, plastique de géométrie de section appropriée ;
- une pluralité de tronçons de fils ou câbles liés entre eux pendant le moulage et la vulcanisation du mélange de caoutchouc enrobant lesdits tronçons.

Par diamètre interne d'une structure annulaire additionnelle, on entend le diamètre du cercle passant par les points de ladite structure radialement les plus à l'intérieur.
Le pneumatique conforme à l'invention est caractérisé en ce que:

la différence entre le diamètre interne de la structure annulaire additionnelle de renforcement radialement la plus à l'intérieur de chaque flanc et le diamètre **Dj** du siège de jante du même côté que le flanc contenant ladite structure annulaire est au moins égale à 20 % du diamètre **Dj**.

Préférentiellement, la différence entre le diamètre interne de la structure annulaire additionnelle de chaque flanc radialement la plus à l'extérieur et le diamètre **Dj** du siège de jante du même côté que le flanc contenant ladite structure annulaire est au plus égal à 1.6 fois la hauteur de section H du pneumatique mesurée sur ce même côté.

Dans une autre variante préférentielle, les structures annulaires additionnelles voisines d'un même flanc, prises deux à deux, sont séparées par un profilé de gomme dont la hauteur, mesurée dans le sens radial, est au moins égale à 15 mm afin d'optimiser le comportement du pneu face à des efforts latéraux importants.

Selon l'invention, l'armature de carcasse peut être ancrée soit en totalité soit seulement de façon partielle à une quelconque des structures annulaires de renforcement de bourrelet ou de flanc.

Chaque structure annulaire additionnelle de renforcement est prévue pour reprendre une partie de la tension totale de carcasse lorsque le pneumatique est monté sur sa jante et gonflé à sa pression d'utilisation. Ainsi, il a été trouvé qu'une tension circonférentielle au moins égale à 10% de la tension de la structure de renforcement de bourrelet était préférable.

Dans une autre variante préférentielle, on peut en outre employer dans un même flanc deux structures additionnelles de même diamètre, ces structures étant décalées axialement, une partie au moins de l'armature de carcasse étant ancrée sur au moins une desdites structures additionnelles.

Préférentiellement, la somme des efforts circonférentiels repris par les structures annulaires de flanc est au moins égale à l'effort circonférentiel auquel est soumis la structure de renforcement de bourrelet.

Il est possible à la personne du métier de déterminer la répartition des efforts circonférentiels dans chacune des structures annulaires de renforcement de flanc ; toutefois, il a été constaté de manière surprenante qu'il pouvait être avantageux de faire en sorte que lesdits efforts aillent en augmentant avec le diamètre de la structure annulaire de renforcement de flanc.

Préférentiellement, chaque portion d'armature de carcasse ancrée sur chaque structure annulaire de renforcement de flanc et de bourrelet forme un retournement, chaque retournement d'une portion d'armature de carcasse étant couplé mécaniquement à au moins une autre portion d'armature ancrée sur une structure annulaire de renforcement de diamètre plus grand.

Avantageusement, dans ce dernier cas, il est prévu radialement à l'extérieur de chaque structure annulaire de renforcement un profilé de remplissage en mélange de caoutchouc ayant une dureté shore A au moins égal(e) à 50, ce profilé assurant un couplage mécanique entre la portion d'armature de carcasse ancré sur ladite structure et le retournement de ladite portion. Ces profilés peuvent en outre être de nature et/ou de caractéristique mécanique différente en fonction de la position dans un même flanc.

La présence combinée de structures annulaires de renforcement et des profilés de mélange caoutchouteux ayant une dureté Shore A au moins égale à 50 augmente de manière très sensible la résistance aux efforts transversaux.

De préférence, lorsque l'une au moins des portions d'armature est retournée autour d'une structure annulaire de renforcement, le retournement formé par ladite portion est situé axialement à l'extérieur d'au moins la structure annulaire de renforcement radialement à l'extérieur la plus proche.

Dans une autre variante de solution, chaque portion de l'armature de carcasse est ancrée par couplage de cisaillement à au moins une structure annulaire de renforcement formée de renforts inextensibles disposés selon au moins une pile dans la direction radiale sur le pneumatique. Préférentiellement, dans cette variante, chaque structure annulaire de renforcement est constituée par au moins deux piles de renforts essentiellement circonférentiels, la portion d'armature de carcasse ancrée sur chaque structure annulaire étant placée axialement entre deux desdites piles.

Afin de fabriquer un pneumatique comprenant, outre une structure annulaire de renforcement circonférentiel de bourrelet, au moins une structure annulaire additionnelle de flanc, le procédé comprend les étapes suivantes :
- on enroule sur un tambour de confection déformable radialement, une première portion de carcasse constituant à terme une partie de l'armature de carcasse ;
- on place de façon à être concentrique à ce tambour et radialement sur l'extérieur à cette première portion une structure annulaire indéformable circonférentiellement de diamètre interne **D0** combinée à un profilé de mélange de caoutchouc pour former une structure annulaire de renforcement de bourrelet ;
- on ancre au moins partiellement sur chacune de ces structures annulaires, une extrémité de ladite portion ;
- on prépare sur un diamètre supérieur à **D0,** une autre portion de l'armature de carcasse du pneumatique, et on place de façon concentrique à cette deuxième portion une structure annulaire de renforcement de diamètre interne **D1, D1** étant supérieur à **D0** de manière à pouvoir ancrer cette deuxième portion d'armature de carcasse sur ces structures annulaires de renforcement ;
- on répète l'opération précédente autant de fois que nécessaire, c'est-à-dire autant de fois que de structures annulaires de renforcement dans le ou les flanc(s) ; puis,
- on place de façon concentrique les unes aux autres les portions d'armature de carcasse ainsi constituées par diamètres de structure annulaire de renforcement croissants pour constituer un empilement ;
- on force, à l'aide de moyens appropriés connus, l'empilement ainsi obtenu à prendre une forme de tore par expansion radiale et rapprochement transversal des structures annulaires de renforcement ;
- on achève la fabrication du pneumatique de façon usuelle bien connue de l'homme du métier.

Ce procédé donne une grande liberté dans la disposition des différentes portions d'armature de carcasse, de manière à former le pneumatique voulu. Les différentes portions d'armature de carcasse peuvent être disposées de façon symétrique ou non par rapport au plan médian du pneumatique tout en étant concentriques les unes par rapport aux autres.

Le procédé qui vient d'être décrit peut avoir des variantes équivalentes. En particulier, l'opération de mise en forme peut être réalisée en une ou plusieurs étapes successives. Par exemple, on forme les différentes portions d'armature de carcasse sur différents tambour avant de les assembler de manière concentrique les unes aux autres et ensuite de les conformer en forme de tore. Une autre possibilité consiste après chaque formation d'une portion d'armature de carcasse à conformer légèrement celle-ci avant de former une autre portion d'armature sur la surface torique obtenue et ainsi de suite.

Dans toutes ces variantes du procédé, les retournements de chaque portion d'armature de carcasse autour des structures annulaires de renforcement peuvent être placés soit radialement vers l'intérieur desdites structures annulaires soit radialement vers l'extérieur desdites structures.

Le procédé décrit s'applique à la formation d'un pneumatique dans lequel l'armature de carcasse est ancrée, outre dans les bourrelets, à au moins une autre structure additionnelle de diamètre plus grand que le diamètre de la structure de renforcement des bourrelets.

Ce procédé permet un excellent positionnement des diverses structures annulaires de renforcement les unes par rapport aux autres dans la direction radiale assurant ainsi, par un très bon centrage, une très bonne uniformité de roulage.

D'autres caractéristiques et avantages de la présente addition apparaîtront au cours de la description qui va suivre, en référence aux dessins annexés dans lesquels
- la figure 1 représente une vue partielle en coupe radiale d'un pneumatique conforme à l'invention ;
- les figures 2 à 4 montrent diverses variantes de pneumatiques selon l'invention ;
- les figures 5 à 9 montrent les étapes d'un procédé de fabrication d'une armature de carcasse pour un pneumatique selon l'invention comprenant deux structures annulaires de renforcement dans chaque flanc ;
- la figure 10 représente une vue partielle du flanc d'un pneumatique conforme à l'invention.

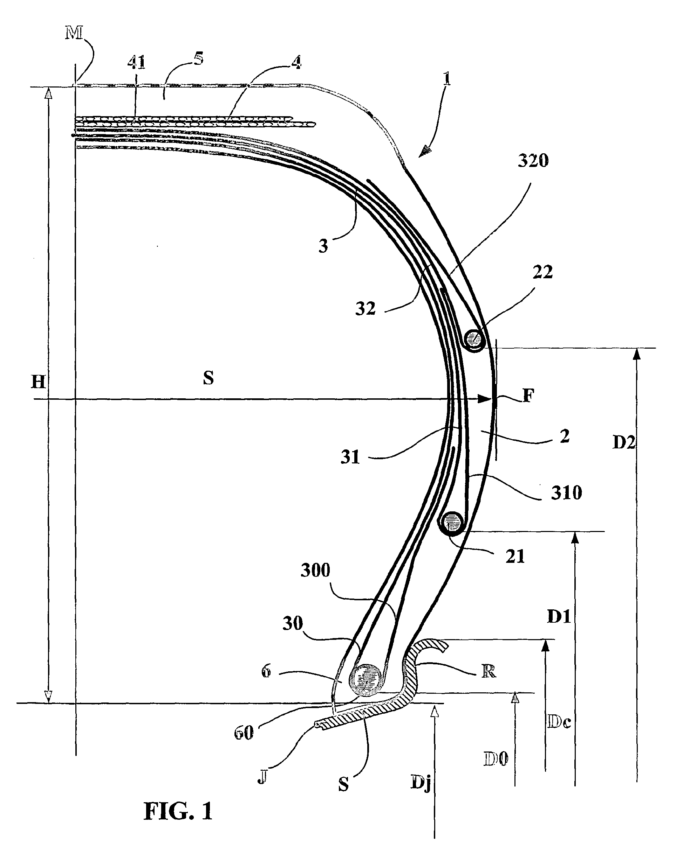

La figure 1 montre une vue partielle d'une coupe transversale d'un pneumatique 1 selon l'invention, ce pneumatique symétrique et comprenant deux structures additionnelles 21, 22 de renforcement des flancs 2 autour desquelles sont ancrées par retournement des portions d'une armature de carcasse 3. Ce pneumatique 1 est monté sur sa jante de montage J comprenant un siège de jante S prolongé axialement et radialement vers l'extérieur par un rebord de jante R dont les points radialement les plus à l'extérieur sont sur un cercle de diamètre Dc.

Dans cette configuration, le pneumatique 1 présente une hauteur H de section mesurée, dans le plan de coupe, entre le diamètre nominal de la jante Dj (pris sensiblement à l'intersection du rebord R. et du siège de jante S) et le point M radialement le plus à l'extérieur de la bande de roulement. Ce pneumatique a une largeur de section S mesurée entre les points des flancs axialement les plus éloignés. Dans le cas présent, le pneumatique a un rapport de forme égal à 0.70.

Le pneumatique 1 montré de manière schématique comprend une partie formant le sommet 4 du pneumatique, cette partie renforcée par une armature de sommet 41 étant pourvue radialement à l'extérieur avec une bande de roulement 5 destinée à venir au contact avec la chaussée pendant le roulage. Prolongeant ce sommet 4 se trouve le flanc 2 qui se termine à son extrémité radialement interne par un bourrelet 6 destiné à venir en contact avec la jante de montage J du pneumatique.

En outre et pour équilibrer les efforts dus à la pression interne de gonflage du pneumatique, ledit pneumatique comprend une armature dite de carcasse 3 s'étendant du sommet aux bourrelets en passant par les flancs.

Une première portion 30 de l'armature de carcasse est ancrée autour d'une structure annulaire 60 de renforcement de bourrelet 6 (sous la forme d'une tringle métallique) en passant axialement de l'intérieur du pneumatique vers l'extérieur pour former un retournement 300. Le diamètre interne **D0** de cette tringle 60 de bourrelet est inférieur au diamètre extérieur du rebord R de jante (correspondant dans le cas présent au diamètre maximal **Dc** de la jante) de manière à assurer le maintien en place du bourrelet sur la jante de montage.

Une deuxième portion 31 de la même armature de carcasse s'étend dans tout le sommet et partiellement dans le flanc jusqu'à venir s'enrouler autour d'une structure annulaire additionnelle 21 de renforcement en passant axialement de l'intérieur du pneumatique vers l'extérieur pour former un retournement 310. La structure annulaire additionnelle 21 est ici une tringle métallique de section transversale plus petite que celle de la tringle de bourrelet 60 et de diamètre interne **D1.** Ce diamètre est supérieur au diamètre extérieur **Dc** du rebord R de jante ; la différence entre le diamètre interne D1 et le diamètre Dj du siège de la jante est supérieure à 20 % du diamètre Dj.

Une troisième et dernière portion 32 de la même armature de carcasse s'étend dans tout le sommet et partiellement dans le flanc jusqu'à venir s'enrouler autour d'une seconde structure annulaire additionnelle 22 de renforcement en passant axialement de l'intérieur du pneumatique vers l'extérieur pour former un retournement 320. La seconde structure annulaire additionnelle 22 est ici une tringle métallique identique à la première structure annulaire additionnelle 21 et de diamètre interne **D2** qui dans le cas présent est tel que la différence **(D2-D1)** est sensiblement égale à la différence **(D1-D0).** Dans le cas présent, la différence entre le diamètre interne D2 et le diamètre Dj du siège de la jante est égale à 1.2 fois la hauteur de section H du pneumatique.

On constate que les retournement 310, 320 de chaque première et seconde portion d'armature de carcasse sont respectivement engagés entre les première et seconde structures annulaires additionnelles 21 et 22 de manière à assurer un bon couplage mécanique desdites portions d'armature.

Dans ce premier exemple, les structures annulaires additionnelles de flanc sont positionnées de part et d'autre du point F du flanc de plus grande largeur sur la coupe représentée.

Un des points importants de cette construction est de pouvoir répartir les efforts dans l'armature de carcasse entre les différentes structures annulaires de renforcement de façon que les efforts de tension circonférentielle dans chaque structure additionnelle de flanc soit au moins égal à 10% de l'effort circonférentiel supporté par la tringle de bourrelet au gonflage à la pression d'utilisation.

Avantageusement, la somme des efforts repris par toutes les structures additionnelles de renfort d'un flanc 21, 22 est au moins égale à l'effort circonférentiel supporté par la tringle de bourrelet 60.

Grâce à cette construction, il est possible d'obtenir un pneumatique présentant une plus grande rigidité transversale en roulage et ainsi améliorer de façon très significative les performances en roulage des véhicules équipés de tels pneumatiques. Cette solution présente un intérêt tout particulier à haute vitesse.

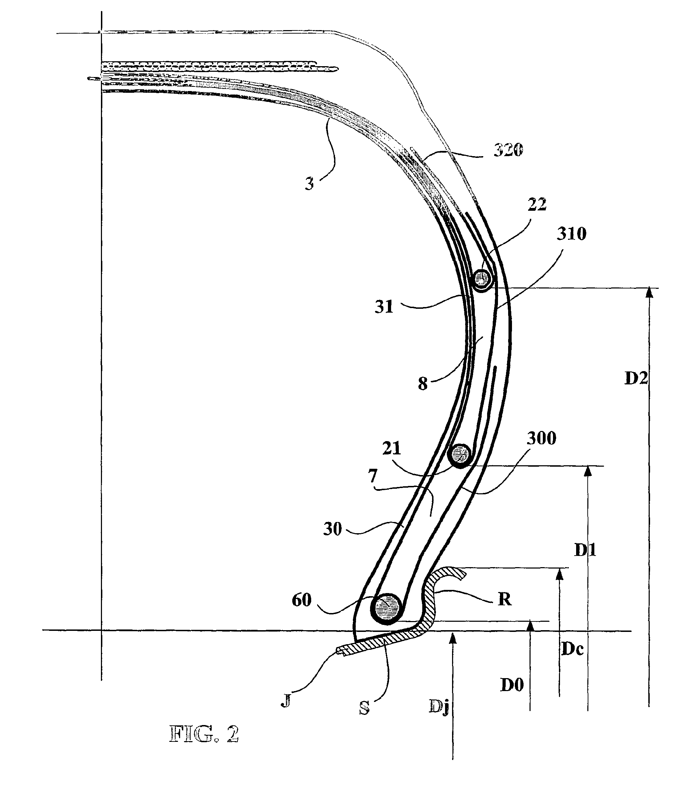

Dans une autre variante représentée à la figure 2 (par commodité les mêmes références sont utilisées quand elles désignent des éléments de structure comparables), la construction est sensiblement même que celle montrée avec la figure 1 en ce qui concerne les trois portions d'armature de carcasse (à savoir trois portions ancrées sur une tringle de bourrelet 60 et sur deux structures annulaires additionnelles 21 et 22 de flanc) à la différence près que radialement au delà de la tringle de bourrelet 60 et radialement au delà de la tringle 21 de flanc radialement la plus proche de la jante sont disposés des profilés de mélanges 7 et 8 de caoutchouc de dureté Shore A au moins égale à 50 et dans le cas présent égale à 80. La hauteur du profilé 8, mesurée dans le sens radial est au moins égale à 15 mm et dans le cas présent égale à 20 mm. Ces profilés assurent une bonne liaison mécanique entre les structures annulaires de renforcement 60, 21, 22 et une plus grande rigidité structurelle des parties de flanc concernées.

Par ailleurs, les retournements 310 et 320 des première et seconde portions 31 et 32 de l'armature de carcasse 3 (ancrées respectivement sur la tringle de bourrelet et la tringle de flanc radialement la plus proche de la jante) suivent les faces axialement extérieures desdits profilés 7 et 8 avant de se superposer partiellement au retournement de la portion d'armature de carcasse radialement la plus proche (respectivement 310 et 320).

Les tringles 21 et 22 de flanc employées dans les variantes des figures 1 et 2 peuvent aisément être remplacées par toute structure annulaire présentant un module d'extension circonférentiel tel que la reprise d'effort de chacune desdites tringles de flanc soit au moins égale à 10% de l'effort circonférentiel s'exerçant sur la tringle de bourrelet.

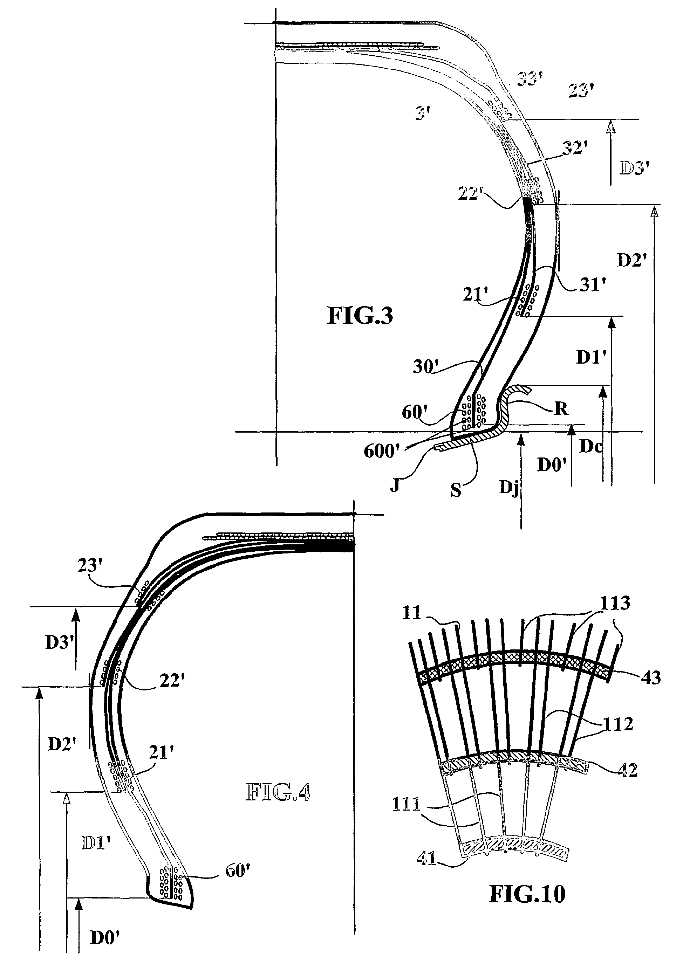

L'une au moins des structures annulaires peut être remplacée par une structure formée d'une série de fils ou câbles enroulés circonférentiellement pour former des piles orientées sensiblement radialement comme cela est montré sur les variantes des figures 3 et 4.

Sur la figure 3, chacune des structures annulaires de renforcement de bourrelet 60' et de flanc 21' et 22' est formée d'au moins deux piles de câbles métalliques. Une première structure 60' dans le bourrelet est constituée de quatre piles 600', enserrant une première portion 30' d'armature de carcasse 3', cette première structure étant située radialement au dessous du diamètre Dc du rebord de jante lorsque le pneumatique est monté sur ladite jante. Le diamètre interne de cette première structure est noté **D0'**.

En outre trois autres portions 31', 32', 33' de la même armature de carcasse 3' sont ancrées chacune à leur extrémité entre deux piles de câbles enroulés circonférentiellement. Les ancrages des différentes portions de carcasse sont faits sans retournement.

Les diamètres internes des structures annulaires de renfort 21', 22', 23', notés respectivement **D1', D2', D3'** et le diamètre **D0'** de la structure de bourrelet 60' sont tels que les distances entre ces structures sur la coupe de la figure 3 soient sensiblement égales.

Dans la variante de la figure 4, les piles des structures annulaires additionnelles 21', 22', 23' de renforcement des flancs sont placées axialement de part et d'autre de toutes les portions 30', 31', 32', 33' d'armature de carcasse. Par exemple, la structure annulaire 23', de diamètre **D3**', radialement la plus à l'extérieur est formée de deux piles entre lesquelles passent les quatre portions d'armature de carcasse.

Ces architectures de pneumatique sont applicables à des pneumatiques de toutes catégories et notamment destinés à des véhicules de tourisme et particulièrement des véhicules hautes vitesse mais également des pneumatiques destinés à des véhicules de poids lourd, pour deux roues, pour engins de génie civil, d'avion.

Ces pneumatiques peuvent être fabriqués avec des procédés mettant en oeuvre une fabrication sur noyau.

On a montré différentes variantes de pneumatiques se montant sur des jantes dont les sièges sont inclinés vers l'intérieur (c'est-à-dire dont les points axialement les plus à l'extérieur sont situés sur un cercle de diamètre supérieur au diamètre du cercle sur lequel sont situés les points axialement à l'intérieur) ; la personne du métier peut adapter cette invention à des pneumatiques destinés à être montés sur des jantes dont au moins un siège est incliné vers l'extérieur (c'est-à-dire dont les points axialement les plus à l'extérieur sont situés sur un cercle de diamètre inférieur au diamètre du cercle sur lequel sont situés les points axialement à l'intérieur) comme définis par exemple dans le brevet US 6092575. Dans le cas d'un pneumatique monté sur une jante ayant des sièges de diamètres différents, il est avantageux de prévoir un plus grand nombre de structures annulaires de renforcement d'ancrage de carcasse sur le flanc le plus long (c'est-à-dire sur le flanc se prolongeant par le bourrelet en contact avec le siège de jante de plus petit diamètre).

Dans une autre variante, montrée schématiquement avec la figure 10, certains des renforts 111 d'une même nappe 11 formant une armature de carcasse peuvent être ancrés sur une première structure annulaire 40 et d'autres renforts 112, 113 de la même nappe 11 peuvent l'être respectivement sur deux autres structures annulaires 41 et 42 (la vue de la figure 10 correspond à une vue partielle d'un flanc).

Description des étapes du procédé

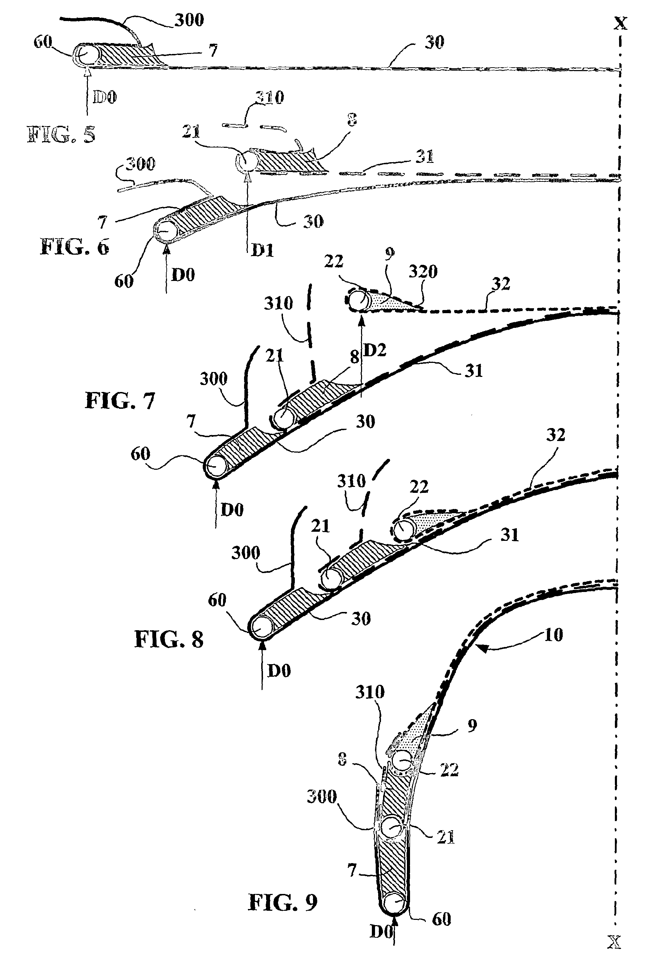

Avec les figures 5 à 9 , on représente une succession d'étapes de fabrication d'une ébauche de pneumatique comprenant une armature de carcasse 3 ancrée à une tringle 6 dans chaque bourrelet et à deux tringles 21, 22 dans chacun des flancs du pneumatique. Cette fabrication correspond sensiblement au pneumatique selon l'invention décrit avec le support de la figure 2.

Dans une première étape (Fig 5), on pose une première portion 30 de carcasse sur un tambour (on a représenté ici une moitié seulement de ladite portion sans montrer explicitement ledit tambour), puis un premier profilé 7 de mélange de caoutchouc est enroulé sur cette première portion près de chaque extrémité latérale de ladite portion et ensuite une tringle de bourrelet 60 de diamètre **D0** est enfilée de façon concentrique au tambour pour venir en contact latéralement avec ledit premier profilé 7. Ensuite, la partie d'extrémité de cette portion de carcasse est partiellement retournée autour de la tringle 60 tout en réservant une partie du retournement 300 pour être plaquée dans une étape suivante sur une deuxième portion de carcasse.

Dans l'étape suivante (Fig 6), on assemble cette première portion 30 d'armature de carcasse avec une deuxième portion 31 réalisée sur un autre tambour (ou sur le même tambour après conformation au diamètre voulu) de la même manière que ladite première portion. Cette deuxième portion 31 de carcasse comprend une partie de l'armature de carcasse partiellement enroulée autour d'une tringle 21 de diamètre interne **D1,** elle même en contact latéral avec un deuxième profilé de mélange de caoutchouc 8. L'assemblage est réalisé en conformant légèrement la première portion 30 de carcasse de façon concentrique à la deuxième portion 31 et en rapprochant axialement les tringles de bourrelet 60 (vers le plan médian repéré XX sur les figures 5 à 9).

L'étape suivante (Fig 7) est identique à l'étape précédente en ce qu'une troisième portion 32 de carcasse est constituée. Cette troisième portion 32 s'enroule autour d'une tringle 22 de diamètre interne **D2** et d'un troisième profilé 9 en mélange de caoutchouc.

À l'étape montrée avec la figure 8, les tringles de bourrelet et de flanc sont rapprochées axialement vers le plan médian de l'ébauche de pneumatique tout en conformant cette ébauche par exemple par gonflage interne selon des moyens connus.

En dernier lieu, une ébauche 10 de pneumatique est obtenue (Fig 9) sous la forme d'un tore, les retournements 300 et 310 des première et deuxième portions d'armature de carcasse étant plaqués contre les profilés 7, 8 et 9 de caoutchouc.

Après cela, on poursuit la fabrication du pneumatique, par application, de manière en soi connue, des nappes d'une ceinture de renforcement puis d'une bande de roulement avant de mettre cette ébauche à l'intérieur d'un moule de moulage et de vulcanisation des mélanges de caoutchouc.

L'invention n'est bien sûr pas limitée aux exemples décrits et représentés et diverses modifications peuvent y être apportées sans sortir de son cadre, tel que défini par les revendications.

## Revendications

1. - Pneumatique (1) destiné à être monté sur une jante de montage J de diamètre maximal **Dc,** ledit pneumatique comprenant :
- des bourrelets (6) destinés à coopérer avec des sièges de la jante de montage, lesdits bourrelets (6) comprenant au moins une structure annulaire (60) de renforcement de bourrelet ;
- un sommet (4) comprenant une structure de renforcement , ce sommet étant surmonté radialement vers l'extérieur par une bande de roulement (5) ;
- de part et d'autre du sommet du pneumatique, un flanc (2) assurant la liaison avec chaque bourrelet (6) ;
- une armature de carcasse (3) s'étendant entre le sommet et les bourrelets ; dont:
- au moins un flanc (2) comprend au moins deux structures annulaires additionnelles (21, 22) de renforcement, chaque structure annulaire additionnelle ayant un diamètre interne au moins égal au diamètre maximal Dc de la jante ;
- l'armature de carcasse (3) est ancrée au moins partiellement sur chaque structure annulaire (60) de renforcement de bourrelet et sur chaque structure annulaire additionnelle (21, 22) de renforcement de flanc;
ce pneumatique étant **caractérisé en ce que** :
- la différence entre le diamètre interne de la structure annulaire additionnelle (21) de renforcement radialement la plus à l'intérieur de chaque flanc et le diamètre Dj du siège de jante du même côté que ledit flanc contenant ladite structure annulaire est au moins égale à 20 % du diamètre Dj.

2. - Pneumatique (1) selon la revendication 1 **caractérisé en ce que** la différence entre le diamètre interne de la structure annulaire additionnelle (22) de renforcement radialement la plus à l'extérieur de chaque flanc et le diamètre Dj du siège de jante du même côté que ledit flanc contenant ladite structure annulaire est au plus égal à 1.6 fois la hauteur de section H du pneumatique.

3. - Pneumatique (1) selon l'une des revendications 1 à 2 **caractérisé en ce que** les structures annulaires additionnelles (21,22) voisines d'un même flanc, prises deux à deux, sont séparées par un profilé de gomme (8) dont la hauteur, mesurée dans le sens radial, est au moins égale à 15 mm.

4. - Pneumatique (1) selon l'une des revendications 1 à 3 **caractérisé en ce que** l'effort de tension dans chaque structure additionnelle (21, 22) de flanc est au moins égal à 10% de l'effort de tension circonférentielle repris par la structure annulaire (60) de bourrelet lorsque le pneumatique est gonflé à sa pression d'utilisation.

5. - Pneumatique (1) selon la revendication 4 **caractérisé en ce que** la somme des efforts circonférentiels repris par les structures annulaires additionnelles (21, 22) de flanc est au moins égale à l'effort circonférentiel auquel est soumis la structure de renforcement (60) de bourrelet lorsque le pneumatique est gonflé à sa pression d'utilisation.

6. - Pneumatique (1) selon l'une quelconque des revendications 1 à 5 **caractérisé en ce que** chacune des structures annulaires de renforcement (60, 21, 22) est une tringle à laquelle est ancrée une portion de l'armature de carcasse en formant un retournement.

7. - Pneumatique (1) selon la revendication 6 **caractérisé en ce que**, au moins entre deux structures annulaires (60, 21, 22) de renforcement d'un même côté du pneumatique, il est prévu un profilé de mélange (7, 8) dont la dureté shore A est au moins égale à 50 et appropriée pour assurer un bon fonctionnement en compression dudit profilé.

8. - Pneumatique (1) selon l'une quelconque des revendications 1 à 5 **caractérisé en ce que** chacune des structures annulaires (60', 21', 22') de renforcement est composée d'une série de fils ou câbles disposés dans la direction circonférentielle pour former au moins une pile s'étendant radialement et à laquelle est ancrée une portion de l'armature de carcasse.

## Claims

1. Tyre (1) designed to be mounted on a mounting rim J of maximum diameter **D_{c}** the said type comprising:
- beads (6) designed to cooperate with seats of the mounting rim, the said beads (6) comprising at least one annular bead reinforcement structure (60);
- a crown (4) comprising a reinforcement structure, this crown being surmounted radially on the outside by a tread (5);
- on either side of the tyre's crown, a sidewall (2) providing connection to each bead (6);
- a carcass reinforcement (3) extending between the crown and the beads;
in which:
- at least one sidewall (2) comprises at least two additional annular reinforcement structures (21, 22), each additional annular structure having an inner diameter at least equal to the maximum diameter **D_{c}** of the rim;
- the carcass reinforcement (3) is anchored at least partially on each annular bead reinforcement structure (60) and on each additional annular sidewall reinforcement structure (21, 22);
this tyre being **characterised in that**:
- the difference between the inner diameter of the radially innermost additional reinforcement structure (21) in each sidewall and the diameter **Dⱼ** of the rim seat on the same side as the said sidewall containing the said annular structure is at least equal to 20% of the diameter **Dⱼ.**

2. Tyre (1) according to Claim 1, **characterised in that** the difference between the inner diameter of the radially outermost additional annular reinforcement structure (22) in each sidewall and the diameter **Dⱼ** of the rim seat on the same side as the said sidewall containing the said annular structure is at most equal to 1.6 times the section height H of the tyre.

3. Tyre (1) according to either of Claims 1 and 2, **characterised in that** the adjacent additional annular structures (21, 22) in the same sidewall, taken two by two, are separated by a rubber profiled element (8) whose height, measured in the radial direction is at least equal to 15 mm.

4. Tyre (1) according to any of Claims 1 to 3, **characterised in that** the tension force in each additional sidewall structure (21, 22) is at least equal to 10% of the circumferential tension force taken up by the annular bead structure (60) when the tyre is inflated to its working pressure.

5. Tyre (1) according to Claim 4, **characterised in that** the sum of the circumferential forces taken up by the additional annular sidewall structures (21, 22) is at least equal to the circumferential force to which the bead reinforcement structure (60) is subjected when the tyre is inflated to its working pressure.

6. Tyre (1) according to any of Claims 1 to 5, **characterised in that** each of the annular reinforcement structures (60, 21, 22) is a wire to which is anchored a portion of the carcass reinforcement by forming an upturn.

7. Tyre (1) according to Claim 6, **characterised in that** at least between two annular reinforcement structures (60, 21, 22) on the same side of the tyre, a rubber profiled element (7, 8) is provided, whose Shore A hardness is at least equal to 50 and is appropriate for ensuring a proper function of the said profiled element under compression.

8. Tyre (1) according to any of Claims 1 to 5, **characterised in that** each of the annular reinforcement structures (60', 21', 22') is composed of a series of threads or cables arranged in the circumferential direction to form at least one stack extending radially and to which a portion of the carcass reinforcement is anchored.

## Patentansprüche

1. Luftreifen (1), der dazu bestimmt ist, auf eine Montagefelge J mit einem Maximaldurchmesser Dc aufgezogen zu werden, wobei der Luftreifen aufweist:
- Wülste (6), die dazu bestimmt sind, mit den Sitzen der Montagefelge zusammenzuwirken, wobei die Wülste (6) mindestens eine ringförmige Wulstverstärkungsstruktur (60) aufweisen;
- einen Scheitel (4), der eine Verstärkungsstruktur enthält, wobei radial außen an dem Scheitel ein Laufstreifen (5) angebracht ist;
- auf beiden Seiten des Scheitels des Luftreifens eine Flanke (2), die die Verbindung mit jedem Wulst (6) gewährleistet;
- eine Karkassenbewehrung (3), die sich zwischen dem Scheitel und den Wülsten erstreckt;
wobei :
- mindestens eine Flanke (2) mindestens zwei zusätzliche ringförmige Verstärkungsstrukturen (21, 22) aufweist, wobei jede zusätzliche Verstärkungsstruktur einen Innendurchmesser aufweist, der mindestens dem maximalen Durchmesser Dc der Felge entspricht;
- die Karkassenbewehrung (3) zumindest teilweise an jeder ringförmigen Verstärkungsstruktur des Wulstes (60) und jeder ringförmigen zusätzlichen Verstärkungsstruktur der Flanke (21, 22) verankert ist;
wobei der Luftreifen **dadurch gekennzeichnet ist, dass**
- der Unterschied zwischen dem Innendurchmesser der zusätzlichen ringförmigen Verstärkungsstruktur (21), die an jeder Flanke am weitesten innen liegt, und dem Durchmesser Dj des Felgensitzes, der auf der gleichen Seite wie die Flanke liegt, die die ringförmige Struktur enthält, mindestens 20 % des Durchmessers Dj beträgt.

2. Luftreifen (1) nach Anspruch 1, **dadurch gekennzeichnet, dass** der Unterschied zwischen dem Innendurchmesser der zusätzlichen ringförmigen Verstärkungsstruktur (22), die radial am weitesten außen in jeder Flanke liegt, und dem Durchmesser Dj des Felgensitzes, der auf der gleichen Seite wie die Flanke liegt, die die ringförmige Struktur enthält, höchstens das 1,6fache der Querschnittshöhe H des Luftreifens beträgt.

3. Luftreifen (1) nach einem der Ansprüche 1 bis 2, **dadurch gekennzeichnet, dass** jeweils zwei benachbarte zusätzliche ringförmige Strukturen (21, 22) der gleichen Flanke durch ein Gummiprofilteil (8) getrennt sind, dessen in radialer Richtung gemessene Höhe mindestens 15 mm beträgt.

4. Luftreifen (1) nach einem der Ansprüche 1 bis 3, **dadurch gekennzeichnet, dass** die Zugkraft an jeder zusätzlichen Flankenstruktur (21, 22) mindestens 10 % der Zugkraft in Umfangsrichtung an der ringförmigen Struktur (60) des Wulstes beträgt, wenn der Luftreifen auf seinen Betriebsdruck aufgepumpt ist.

5. Luftreifen (1) nach Anspruch 4, **dadurch gekennzeichnet, dass** die Summe der Kräfte in Umfangsrichtung an den zusätzlichen ringförmigen Strukturen (21, 22) der Flanke mindestens der Kraft in Umfangsrichtung entspricht, der die Verstärkungsstruktur (60) des Wulstes ausgesetzt ist, wenn der Luftreifen auf seinen Betriebsdruck aufgepumpt ist.

6. Luftreifen (1) nach einem der Ansprüche 1 bis 5, **dadurch gekennzeichnet, dass** jede ringförmige Verstärkungsstruktur (60, 21, 22) ein Kern ist, an dem ein Teil der Karkassenbewehrung unter Bildung eines Hochschlags verankert ist.

7. Luftreifen (1) nach Anspruch 6, **dadurch gekennzeichnet, dass** mindestens zwischen zwei ringförmigen Verstärkungsstrukturen (60, 21, 22) derselben Seite des Luftreifens ein Profilteil aus einer Mischung (7, 8) vorgesehen ist, deren Shore A-Härte mindestens 50 ist und geeignet ist, um ein gutes Funktionieren des Profilteils in Kompression zu gewährleisten.

8. Luftreifen (1) nach einem der Ansprüche 1 bis 5, **dadurch gekennzeichnet, dass** jede der ringförmigen Verstärkungsstrukturen (60', 21', 22') aus einer Reihe von Drähten oder Seilen zusammengesetzt ist, die in Umfangsrichtung angeordnet sind, sodass sie mindestens einen Stapel bilden, der sich in radialer Richtung erstreckt und an dem ein Teil der Karkassenbewehrung verankert ist.
